# EUROPEAN PATENT APPLICATION

(11) **EP 4 628 376 A1**
(43) Date of publication of application: **08.10.2025**
(21) Application number: 23897308.5
(22) Date of filing: 23.10.2023
(51) Int. Cl.: B60W 10/20, B60B 15/00, B60W 10/04, B62D 6/00, B62D 25/16, B62D 61/12

(54) **WORK VEHICLE**

(30) Priority: 29.11.2022 JP 2022190266; 29.11.2022 JP 2022190268
(71) Applicant: Kubota Corporation, Osaka 556-8601 (JP)
(72) Inventor: IDA Yusuke, Sakai-shi, Osaka 590-0908 (JP); HIRAOKA Minoru, Sakai-shi, Osaka 590-0908 (JP); YAMANAKA Yukifumi, Sakai-shi, Osaka 590-0908 (JP); ISHIKAWA Junichi, Sakai-shi, Osaka 590-0908 (JP); YOSHII Kaichiro, Sakai-shi, Osaka 590-0908 (JP); HAZAWA Yuhei, Sakai-shi, Osaka 590-0908 (JP); JINNOUCHI Katsutoshi, Sakai-shi, Osaka 590-0908 (JP); NIKI Ryota, Sakai-shi, Osaka 590-0908 (JP); YAMAGISHI Ryota, Sakai-shi, Osaka 590-0908 (JP)
(74) Representative: Cabinet Beau de Loménie
(86) International application number: PCT/JP2023/038132
(87) International publication number: WO 2024/116651

(57) **Abstract**

A work vehicle including: a vehicle body 1 having a loading portion that is able to load a load; a plurality of drive wheels 2 each located in front and rear on both right and left sides of the vehicle body 1, and configured to be steered separately; a steering angle detection unit 32 configured to detect respective orientations of the plurality of drive wheels 2; and a controller C configured to perform drive control for driving each of the plurality of drive wheels 2 and control for changing the respective orientations of the plurality of drive wheels 2 separately. The controller C is configured such that the respective orientations of a first drive wheel 2 located on one of right and left sides of the vehicle body 1 among the plurality of drive wheels 2 and a second drive wheel 2 located on the other of the right and left sides of the vehicle body 1 among the plurality of drive wheels 2 are different from each other when the drive control is stopped.

## Description

### Technical Field

The present invention relates to a work vehicle.

### Background Art

For example, as a work vehicle in the related art disclosed in Japanese Patent Application Laid-Open No. 2020-1443 and Japanese Patent Application Laid-Open No. 2019-111985, a work vehicle that is able to travel on an irregular land (a portion having a step or unevenness) is known. These work vehicles include a vehicle body, a plurality of drive wheels for causing the vehicle body to travel, a plurality of auxiliary wheels for assisting traveling of the vehicle body, and a plurality of support legs that is connected to the vehicle body and supports the drive wheels and the auxiliary wheels. The plurality of drive wheels is drive-controlled by a controller. The plurality of drive wheels is configured to be steered separately by a turning mechanism.

### Citation List

### Patent Literatures

Patent Literature 1: Japanese Patent Application Laid-Open No. 2020-1443
Patent Literature 2: Japanese Patent Application Laid-Open No. 2019-111985

### Summary of Invention

### Technical Problem

By the way, it is important that a stop position of the work vehicle is maintained when the work vehicle is stopped. Therefore, a configuration in which the drive wheel includes a brake mechanism is common. However, for example, in a case where the work vehicle is stopped for a long period of time, it is conceivable that a braking force of a brake decreases with the passage of time and the stop position of the work vehicle is not maintained for a long period of time. Therefore, for example, when the work vehicle is stopped on an inclined land for a long period of time, it is conceivable that there is a possibility that the work vehicle gradually goes down the inclined land with the passage of time. As a measure for avoiding such inconvenience, it is conceivable that a mechanical type parking brake is mounted on the work vehicle. However, when such a parking brake is mounted, the number of components increases, which increases the cost. A first object of the present invention is to provide a work vehicle that is able to maintain the stop position of the work vehicle for a long period of time with a simple configuration. In addition, in such a work vehicle, it is desired to more suitably travel on an irregular land. In view of this situation, a second object of the present invention is to provide a work vehicle that is able to more suitably travel on the irregular land.

### Solution to Problem

A work vehicle according to an aspect of the present invention for achieving the first object includes: a vehicle body having a loading portion that is able to load a load; a plurality of drive wheels each located in front and rear on both right and left sides of the vehicle body, and configured to be steered separately; a steering angle detection unit configured to detect respective orientations of the plurality of drive wheels; and a controller configured to perform drive control for driving each of the plurality of drive wheels and control for changing the respective orientations of the plurality of drive wheels separately, in which the controller is configured such that the respective orientations of a first drive wheel located on one of right and left sides of the vehicle body among the plurality of drive wheels and a second drive wheel located on the other of the right and left sides of the vehicle body among the plurality of drive wheels are different from each other when the drive control is stopped.

According to the present invention, the controller is configured such that the respective orientations of the first drive wheel located on one of right and left drive wheels and the second drive wheel located on the other of the right and left drive wheels are different from each other. When the respective orientations of the right and left drive wheels are different from each other, a rolling orientation of one of the right and left drive wheels and a rolling orientation of the other of the right and left drive wheels are different from each other. From this, each of the right and left drive wheels interacts a force with each other in directions different from the rotation directions, and receives a reaction force in a lateral skidding direction from the ground. That is, when the drive wheel is about to roll, friction occurs between the drive wheel and the ground. As a result, each of the right and left drive wheels does not rotate. Accordingly, for example, even in a case where the work vehicle is stopped for a long period of time on an inclined land, the stop position of the work vehicle is maintained without requiring a dedicated parking brake. As a result, a work vehicle that is able to maintain the stop position of the work vehicle for a long period of time with a simple configuration is realized.

Further, in the present invention for achieving the first object, the controller is preferably configured such that the respective orientations of the first drive wheel and the second drive wheel are different from each other to make the respective orientations opposite to each other with respect to the neutral orientation in which the vehicle body is caused to move straight or substantially straight when the drive control is stopped.

According to the present configuration, the right and left drive wheels interact forces with each other in opposite orientations with respect to the straight movement direction of the vehicle body. As a result, each of the right and left drive wheels receives a reaction force in the lateral skidding direction from the ground and does not rotate.

Further, in the present invention for achieving the first object, the controller is preferably configured such that the orientations of all the plurality of drive wheels are different from each other when the drive control is stopped.

According to the present configuration, the stop position of the work vehicle is reliably maintained each time the controller stops the drive control. In addition, friction is strongly generated between the drive wheels and the ground due to the configuration in which all the orientations of the plurality of drive wheels are different from each other. Accordingly, the stop position of the work vehicle is firmly maintained.

Further, in the present invention for achieving the first object, the work vehicle preferably further includes: an inclination detection unit configured to detect an inclination state of the vehicle body, in which the controller is preferably configured such that the respective orientations of the first drive wheel located on a lower side in one of the right and left sides among the plurality of drive wheels and the second drive wheel located on a lower side on the other of the right and left sides among the plurality of drive wheels are different from each other based on the inclination state of the vehicle body.

According to the present configuration, since each of the first drive wheel and the second drive wheel is located on the lower side, each of the first drive wheel and the second drive wheel firmly receives a weight of the vehicle body. Therefore, the frictional force between the drive wheel and the ground is increased, and the stop position of the work vehicle is firmly maintained.

Further, in the present invention for achieving the first object, the work vehicle preferably further includes: an operation detector configured to detect a manual operation with respect to the plurality of drive wheels, in which the controller is preferably configured such that the respective orientations of the first drive wheel and the second drive wheel are different from each other when a preset time elapses from a time when the operation detector detects no manual operation.

According to the present configuration, the stop position of the work vehicle is reliably maintained each time the operation detector does not detect the manual operation.

In the present invention for achieving the first object, the work vehicle preferably further includes: a support mechanism supported by the vehicle body and configured to support the plurality of drive wheels to be positionally changeable with respect to the vehicle body; a hydraulic motor configured to drive each of the plurality of drive wheels by using supply and discharge of hydraulic fluid as drive energy; a control valve configured to change supply and discharge amounts of the hydraulic fluid with respect to the hydraulic motor; and an inclination detection unit configured to detect an inclination state of the loading portion, in which the controller is preferably configured to control an operation of the support mechanism such that the loading portion is in a horizontal posture based on the inclination state of the loading portion, and such that the drive control is stopped by closing the control valve to block the supply and discharge of the hydraulic fluid with respect to the hydraulic motor when the vehicle is stopped.

According to the present configuration, the loading portion is maintained in the horizontal posture based on the operation of the support mechanism. In addition, the plurality of drive wheels use hydraulic pressure as a drive source. Therefore, when the supply and discharge of the hydraulic fluid with respect to the hydraulic motor is blocked, the drive wheel is stopped, and when the hydraulic fluid inside the hydraulic motor does not flow, the rotation of the hydraulic motor is locked. In this case, the hydraulic motor functions as a brake with respect to the drive wheel. However, there is a case where the hydraulic fluid leaks from the hydraulic motor, and in this case, the hydraulic motor does not function as a brake. Even in such a case, the stop position of the work vehicle is firmly maintained by the configuration in which the respective orientations of the first drive wheel and the second drive wheel are different from each other.

A feature of the present invention for achieving the second object is that a work vehicle includes: a vehicle body; a plurality of drive wheels configured to cause the vehicle body to travel; a plurality of auxiliary wheels configured to assist traveling of the vehicle body; and a plurality of support legs connected to the vehicle body and configured to support the drive wheels and the auxiliary wheels, in which a large number of lugs are formed on a tread portion of the drive wheel, and a tread portion of the auxiliary wheel is formed in a shape different from a shape of the tread portion of the drive wheel.

According to the present invention, since a large number of lugs are formed in the tread portion of the drive wheel, the drive wheel is able to exert a grip force. In addition, by forming the tread portion of the auxiliary wheel in a shape different from the tread portion of the drive wheel, the auxiliary wheel easily exerts an original function of assisting the vehicle body in traveling. That is, according to the present configuration, it is possible to realize a work vehicle that is able to more suitably travel on an irregular land.

Further, in the present invention for achieving the second object, a large number of lugs is preferably formed only on the tread portion of the drive wheel in the tread portion of the drive wheel and the tread portion of the auxiliary wheel.

Here, since the auxiliary wheel is not rotationally driven, the auxiliary wheel rotates following the drive wheel that is rotationally driven. According to the present configuration, since a large number of lugs are not formed on the tread portion of the auxiliary wheel, it is difficult to impair the original function of assisting the traveling of the vehicle body with the auxiliary wheel. For example, the auxiliary wheel is less likely to exert an unnecessary grip force or be caught on surrounding objects. Accordingly, the work vehicle is able to be caused to smoothly travel.

Further, in the present invention for achieving the second object, a large number of lugs is preferably formed on the tread portion of the drive wheel and the tread portion of the auxiliary wheel, respectively, and a height of the lug of the auxiliary wheel is preferably lower than a height of the lug of the drive wheel.

According to the present configuration, since the height of the lug of the auxiliary wheel is lower than the height of the lug of the drive wheel, it is difficult to impair the original function of assisting the traveling of the vehicle body with the auxiliary wheels. For example, the auxiliary wheel is less likely to exert an unnecessary grip force or be caught on surrounding objects.

Further, in the present invention for achieving the second object, the plurality of drive wheels preferably includes the drive wheels on a front side and the drive wheels on a rear side, and a large number of lugs in the drive wheels on the front side and a large number of lugs in the drive wheels on the rear side are preferably arranged front-rear symmetrically.

According to the present configuration, when the work vehicle moves forward, a large number of lugs in the drive wheels on the front side is able to be arranged such that the drive wheels on the front side exert the grip force, and when the work vehicle moves backward, a large number of lugs in the drive wheels on the rear side is able to be arranged such that the drive wheels on the rear side exert the grip force.

Further, in the present invention for achieving the second object, an outer diameter of the auxiliary wheel is preferably smaller than an outer diameter of the drive wheel.

According to the present configuration, the diameter of the auxiliary wheel is reduced, and thus the distance (wheel base) between the center of the drive wheels on the front side and the center of the drive wheels on the rear side is able to be shortened.

Further, in the present invention for achieving the second object, the work vehicle preferably further includes: a plurality of mudguard members configured to cover each of the plurality of drive wheels from above, in which the mudguard members are preferably formed in a shape along an outer peripheral shape of the drive wheels.

According to the present configuration, the mudguard member is formed in a shape along the outer peripheral shape of the drive wheel, and the mudguard member is able to be compact while preventing the mud splashed by the drive wheel from being attached to the vehicle body or the like.

Furthermore, in the present invention for achieving the second object, the mudguard member is preferably disposed above a rotation axis center of the drive wheel.

According to the present configuration, since the mudguard member is located at a relatively high position, the mudguard member is able to be prevented from coming into contact with the ground.

Further, in the present invention for achieving the second object, the drive wheel is preferably operatable to steer, and the mudguard member is preferably supported by the support leg.

According to the present configuration, the support leg is able to be used to support the mudguard member. In addition, the mudguard member is able to be integrated with the support leg and thereby the mudguard member does not hinder the steering operation of the drive wheel.

The above and other embodiments, procedures, characteristics, and effects of the present invention will be further clarified from the detailed description of the embodiments based on the following reference to the drawings.

### Brief Description of Drawings

Fig. 1 is a side view of a work vehicle according to a first embodiment;
Fig. 2 is a rear view of the work vehicle according to the first embodiment;
Fig. 3 is a plan view of the work vehicle according to the first embodiment;
Fig. 4 is a plan view of a support mechanism according to the first embodiment;
Fig. 5 is a side view of the support mechanism according to the first embodiment;
Fig. 6 is a control block diagram according to the first embodiment;
Fig. 7 is a plan view of the work vehicle while orientations of drive wheels are different from each other in the first embodiment;
Fig. 8 is a flowchart illustrating control when a vehicle is stopped in the first embodiment;
Fig. 9 is a left side view illustrating a work vehicle according to a second embodiment;
Fig. 10 is a plan view illustrating the work vehicle according to the second embodiment;
Fig. 11 is a left side view illustrating a drive wheel on a left front side, a drive wheel on a left rear side, an auxiliary wheel on a left front side, an auxiliary wheel on a left rear side, a mudguard member on a left front side, and a mudguard member on a left rear side according to the second embodiment;
Fig. 12 is a plan view illustrating the drive wheel on the left front side, the drive wheel on the left rear side, the auxiliary wheel on the left front side, the auxiliary wheel on the left rear side, the mudguard member on the left front side, and the mudguard member on the left rear side according to the second embodiment;
Fig. 13 is a left side view illustrating the work vehicle that moves forward on an uphill slope in the second embodiment;
Fig. 14 is a left side view illustrating the work vehicle that moves backward on a downhill slope in the second embodiment;
Fig. 15 is a left side view illustrating a drive wheel on a left front side, a drive wheel on a left rear side, an auxiliary wheel on a left front side, an auxiliary wheel on a left rear side, a mudguard member on a left front side, and a mudguard member on a left rear side according to another embodiment of the second embodiment; and
Fig. 16 is a plan view illustrating the drive wheel on the left front side, the drive wheel on the left rear side, the auxiliary wheel on the left front side, the auxiliary wheel on the left rear side, the mudguard member on the left front side, and the mudguard member on the left rear side according to another embodiment of the second embodiment.

### Description of Embodiments

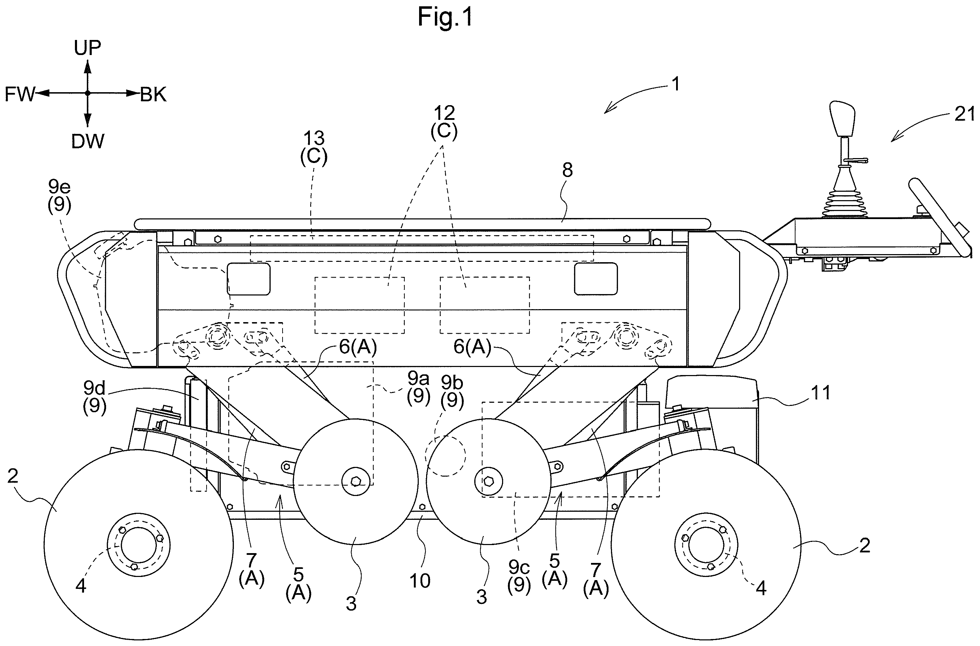

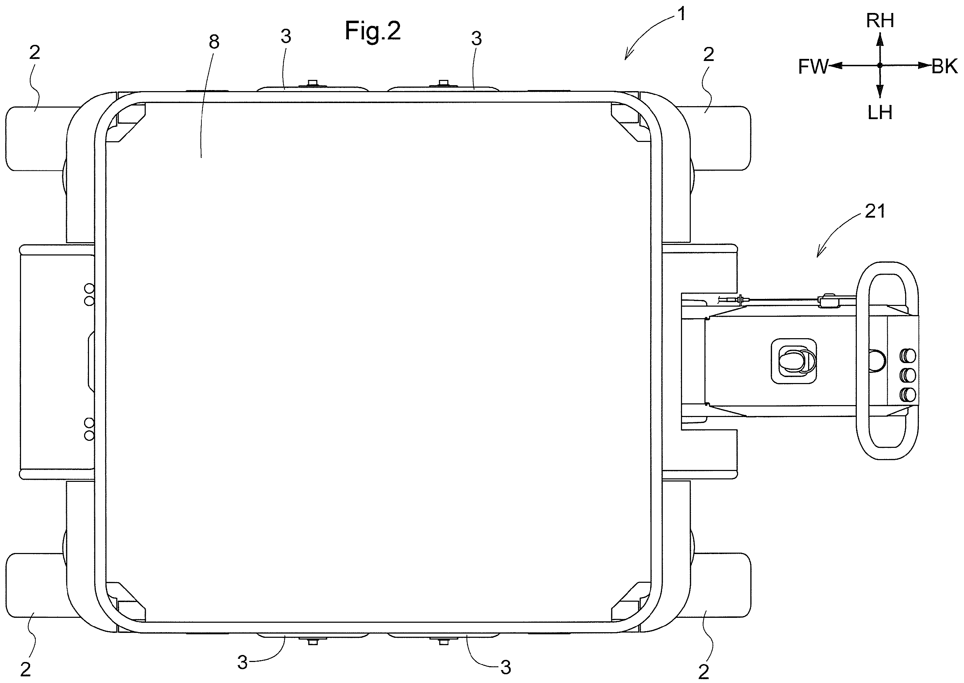

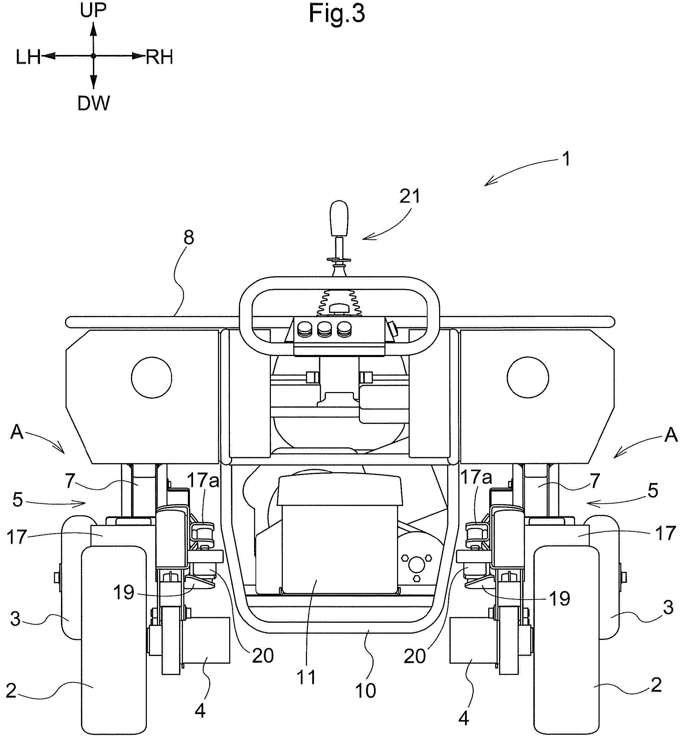

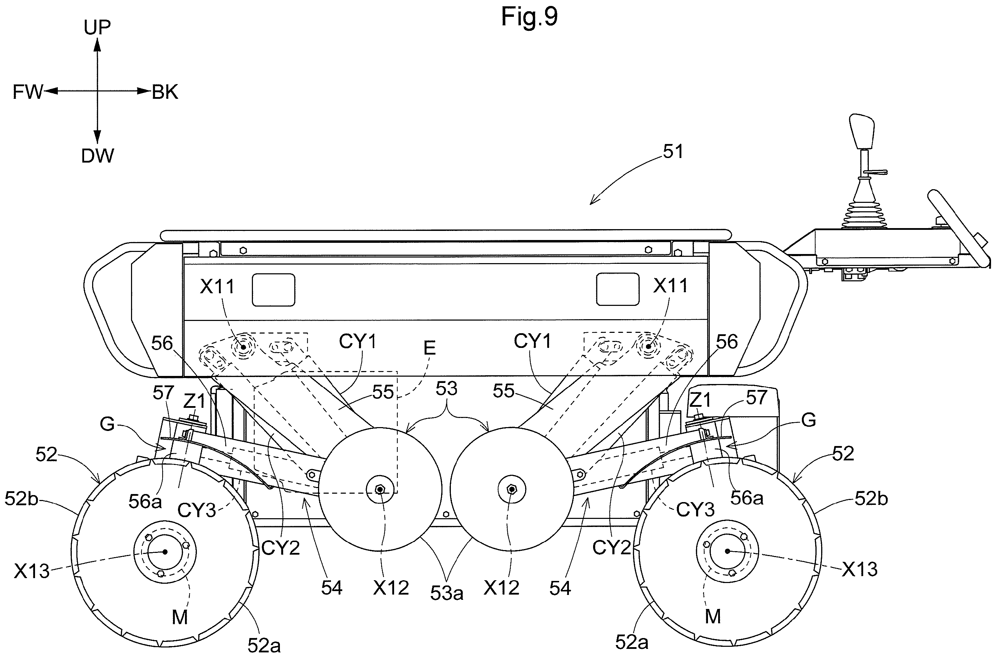

A first embodiment of the present invention for achieving the first object will be described with reference to Figs. 1 to 8, and a second embodiment of the present invention for achieving the second object will be described with reference to Figs. 9 to 16. A direction of an arrow "FW" illustrated in the drawing is defined as "front of a vehicle body", a direction of an arrow "BK" illustrated in the drawing is defined as "rear of the vehicle body", a direction of an arrow "LH" illustrated in the drawing is defined as "left of the vehicle body", a direction of an arrow "RH" illustrated in the drawing is defined as "right of the vehicle body", a direction of an arrow "UP" illustrated in the drawing is defined as "top of the vehicle body", and a direction of an arrow "DW" illustrated in the drawing is defined as "bottom of the vehicle body".

### [First Embodiment]

As illustrated in Figs. 1 to 3, a work vehicle includes a vehicle body 1 (vehicle main body) having a substantially rectangular shape in a plan view, four drive wheels 2 (traveling wheels), four auxiliary wheels 3, support mechanisms A, and four hydraulic motors 4. The vehicle body 1 supports equipment and the like of the entire vehicle. The four drive wheels 2 support the vehicle body 1. The four auxiliary wheels 3 are provided corresponding to the four drive wheels 2, respectively. The support mechanisms A support the four drive wheels 2 to be positionally changeable with respect to the vehicle body 1. The hydraulic motor 4 drives the drive wheel 2. The hydraulic motor 4 receives drive energy by the supply and discharge of a hydraulic fluid. The four drive wheels 2 are driven independently by the four hydraulic motors 4. The drive wheel 2 located on one of the right and left sides corresponds to a "first drive wheel" of the present invention. The drive wheel 2 located on one of the right and left sides corresponds to a "second drive wheel" of the present invention.

The drive wheels 2 are each located in front and rear on both right and left sides of the vehicle body 1. In the first embodiment, the work vehicle includes the four drive wheels 2 of a left front, a right front, a left rear, and a right rear. In addition, the work vehicle includes the support mechanisms A that support the four drive wheels 2. The support mechanism A includes four folding link mechanisms 5 (support legs), four first hydraulic cylinders 6, and four second hydraulic cylinders 7. Each of the four first hydraulic cylinders 6 and the four second hydraulic cylinders 7 is a telescopic actuator for changing the position of the drive wheel 2 with respect to the vehicle body 1, and is configured to individually change a posture of the folding link mechanism 5.

An upper surface of the vehicle body 1 includes a flat loading portion 8 on which a load is able to be loaded. The loading portion 8 is a portion having a substantially rectangular shape in a plan view and extends from a right end to a left end of the vehicle body 1. The load is able to be placed on the loading portion 8. The load placed on the loading portion 8 is, for example, agricultural materials, agricultural materials such as fertilizers and chemicals, harvested products or harvest baskets, and pallets on which these are placed.

A hydraulic supply source 9, a plurality of hydraulic control valves 12, an electronic control unit (ECU) 13, a battery 11 for power supply, and the like are provided below the loading portion 8 in the vehicle body 1. The hydraulic supply source 9 sends out the hydraulic fluid toward the first hydraulic cylinder 6, the second hydraulic cylinder 7, and the hydraulic motor 4. From this, the hydraulic supply source 9 is configured to supply the drive energy for operating the support mechanism A and the drive energy for driving the four drive wheels 2. The plurality of hydraulic control valves 12 adjusts a supply state of the hydraulic fluid from the hydraulic supply source 9. The hydraulic control valve 12 may be a proportional valve or may be an electromagnetic valve of a PWM control method. The ECU 13 controls an operation of the hydraulic control valve 12. The hydraulic control valve 12 corresponds to a "control valve" of the present invention.

The hydraulic supply source 9 is supported by an underframe 10. The hydraulic supply source 9 includes an engine 9a, a hydraulic pump 9b, a hydraulic fluid tank 9c, a radiator 9d, a fuel tank 9e, and the like. The hydraulic pump 9b is driven by the engine 9a. The fuel tank 9e is located at a rear portion of the vehicle body 1.

The ECU 13 includes a microcomputer and is able to execute various controls in accordance with a control program. In the first embodiment, a controller C is configured of a plurality of hydraulic control valves 12 and the ECU 13. A generator (not illustrated) is driven by the power of the engine 9a. Then, the power generated by the generator is charged in the battery 11.

A drive operation interface 21 is provided behind the loading portion 8 in the vehicle body 1. The drive operation interface 21 is able to perform a manual operation by an operator from the outside of the vehicle. The operator is able to perform the drive operation of the vehicle with an operation of the drive operation interface 21. In addition, the operator is able to perform the drive operation of the vehicle with a remote operation of a remote control device RC as a wireless operation method in addition to the operation of the drive operation interface 21. The remote control device RC is, for example, a proportional type wireless transmitter, a smartphone, or a tablet computer. Each of the drive operation interface 21 and the remote control device RC is configured to output a signal of a traveling command or a signal of a turning command for the drive wheel 2, a signal of a lifting/lowering command for the folding link mechanism 5, and the like based on a manual operation of the operator.

### [Support Mechanism of First Embodiment]

As described above, the support mechanism A includes a plurality of (four in the first embodiment) folding link mechanisms 5, a plurality of (four in the first embodiment) first hydraulic cylinders 6, and a plurality of (four in the first embodiment) second hydraulic cylinders 7. As illustrated in Fig. 1, the four drive wheels 2 are supported separately from each other with respect to the vehicle body 1 via the folding link mechanisms 5 to be liftable and lowerable. In other words, the support mechanisms A are supported by the vehicle body 1 and support the four drive wheels 2 to be positionally changeable with respect to the vehicle body 1.

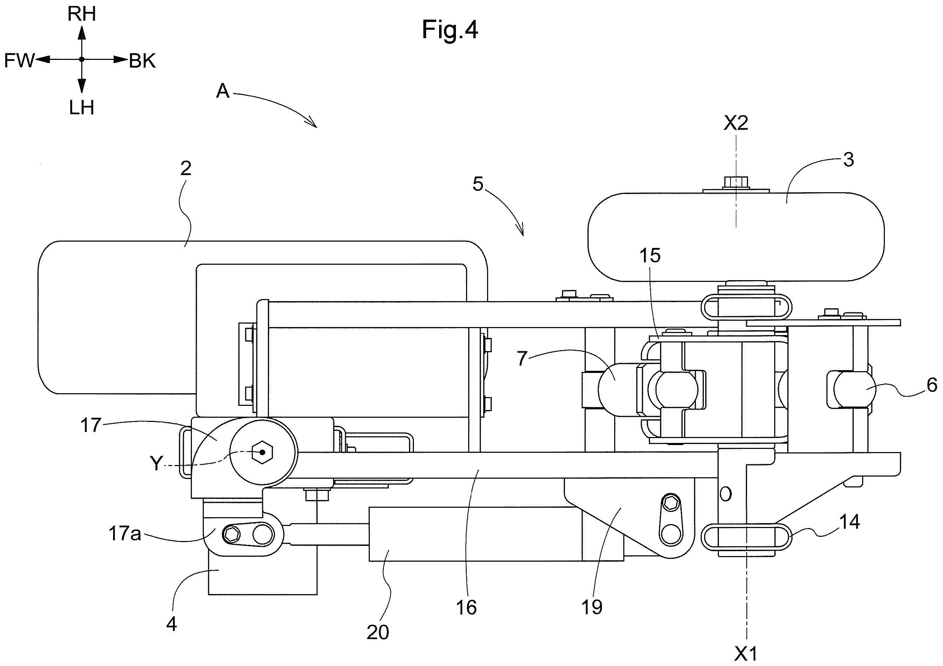

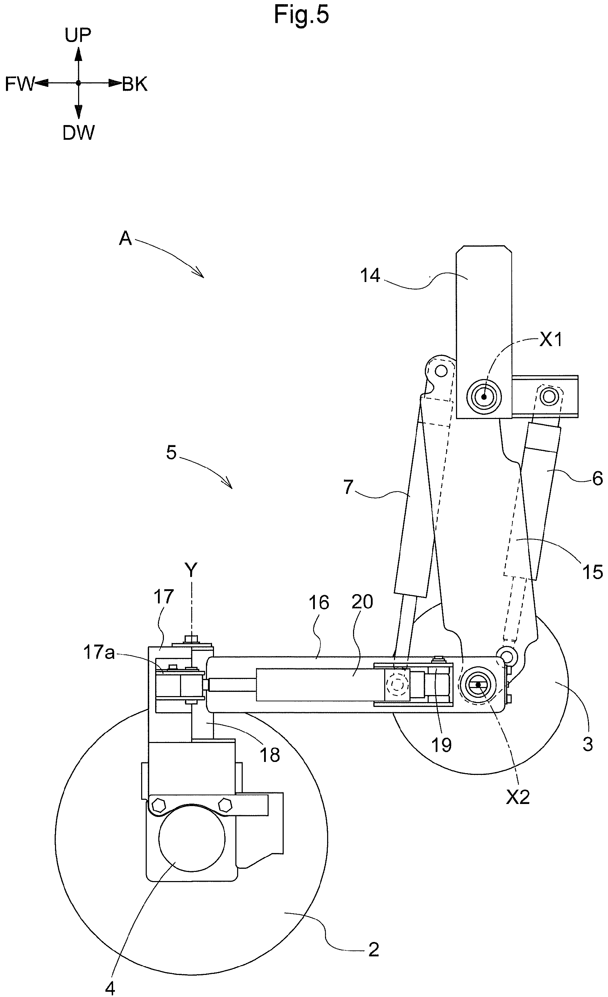

As illustrated in Figs. 4 and 5, the folding link mechanism 5 includes a proximal end portion 14, a first link 15, and a second link 16. The proximal end portion 14 is supported by the vehicle body 1. An upper end portion of the first link 15 is rotatably supported by a lower portion of the proximal end portion 14 around a horizontal axis center X1. One end portion of the second link 16 is rotatably supported by a lower end portion of the first link 15 around a horizontal axis center X2. In addition, a support bracket 17 is connected to the other end portion of the second link 16. The drive wheel 2 is supported by the support bracket 17.

A boss portion 18 is provided at a swing-side end portion of the second link 16. The support bracket 17 is supported by the boss portion 18 to be swingable around a vertical axis center Y. One end portion of the second link 16 includes a bracket 19. The support bracket 17 includes an arm portion 17a. A hydraulic drive type turning cylinder 20 is provided between the bracket 19 and the arm portion 17a.

The first hydraulic cylinder 6, the second hydraulic cylinder 7, and the turning cylinder 20 are driven to be extended and/or contracted by the hydraulic fluid from the hydraulic pump 9b.

The first hydraulic cylinder 6 is configured to change a swing posture of the first link 15 with respect to the vehicle body 1. In addition, the second hydraulic cylinder 7 is configured to change the swing posture of the second link 16 with respect to the first link 15.

While the operation of the second hydraulic cylinder 7 is stopped, when the first hydraulic cylinder 6 extends or contracts, each of the first link 15, the second link 16, and the drive wheel 2 integrally swings around the horizontal axis center X1 while a relative posture is constantly maintained. While the operation of the first hydraulic cylinder 6 is stopped, when the second hydraulic cylinder 7 extends or contracts, the second link 16 and the drive wheel 2 integrally swing around the horizontal axis center X2 while the posture of the first link 15 is constantly maintained.

The auxiliary wheel 3 is rotatably supported at an intermediate folding portion of each of the plurality of folding link mechanisms 5. The auxiliary wheel 3 is a wheel having an outer diameter substantially the same as that of the drive wheel 2. The first link 15 and the second link 16 are pivotally connected to each other by a support shaft. The support shaft protrudes to the outer side in a lateral width direction of the vehicle body. The auxiliary wheel 3 is rotatably supported at a protruding portion of the support shaft.

An orientation of the drive wheel 2 is changed by the extension and contraction of the turning cylinder 20. In other words, the drive wheel 2 is turning-driven by the extension and contraction operation of the turning cylinder 20. The turning cylinder 20 is disposed on a right and left center side of the vehicle body 1 with respect to the drive wheel 2 of a turning target. When the turning cylinder 20 extends or contracts, the drive wheel 2 rotates around the vertical axis center Y with respect to the folding link mechanism 5. Accordingly, the turning operation of the drive wheel 2 is possible.

The drive wheel 2 located below the front right portion of the vehicle body 1 is turned clockwise by the extension of the turning cylinder 20 and is turned counterclockwise by the contraction of the turning cylinder 20. The drive wheel 2 located below the front left portion of the vehicle body 1 is turned counterclockwise by the extension of the turning cylinder 20 and is turned clockwise by the contraction of the turning cylinder 20. The drive wheel 2 located below the rear right portion of the vehicle body 1 is turned counterclockwise by the extension of the turning cylinder 20 and is turned clockwise by the contraction of the turning cylinder 20. The drive wheel 2 located below the rear left portion of the vehicle body 1 is turned clockwise by the extension of the turning cylinder 20 and is turned counterclockwise by the contraction of the turning cylinder 20. When the vehicle body 1 moves straight or substantially straight, each stroke position of the four turning cylinders 20 is located at a neutral stroke position set in advance between a stroke end on an extension side and a stroke end on a contraction side.

### [Control Configuration of First Embodiment]

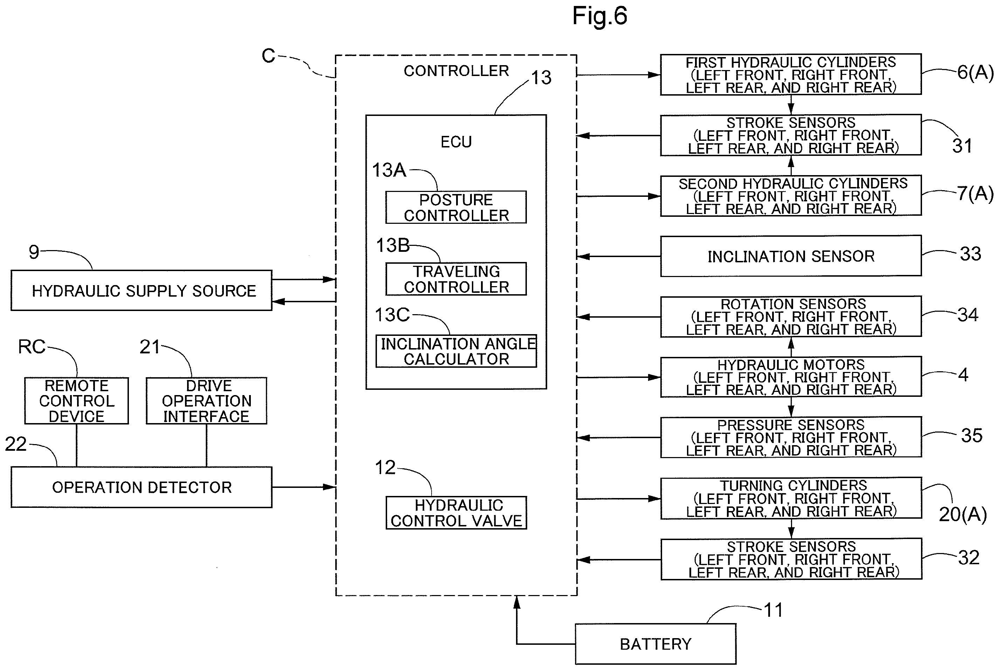

A control configuration of the first embodiment will be described with reference to Fig. 6. The ECU 13 controls a flow rate adjustment of the hydraulic fluid in the hydraulic control valve 12. The hydraulic control valve 12 is configured to adjust the supply and discharge amounts of the hydraulic fluid in each of the four hydraulic motors 4, the four first hydraulic cylinders 6, the four second hydraulic cylinders 7, and the four turning cylinders 20. As a result, the ECU 13 is able to control a rotation speed of the hydraulic motor 4, that is, a rotation speed of the drive wheel 2.

This work vehicle includes various sensors. Each of the four first hydraulic cylinders 6 and the four second hydraulic cylinders 7 includes a stroke sensor 31. In addition, each of the four turning cylinders 20 includes a stroke sensor 32 that is able to detect the stroke position. An inclination sensor 33 that is able to detect an inclination state of the vehicle body 1 is provided. Further, a rotation sensor 34 that is able to detect the rotation speed of the drive wheel 2 is provided in the vicinity of the drive wheel 2. In addition, the hydraulic motor 4 includes a pressure sensor 35 that is able to detect a pressure of the hydraulic fluid. The stroke sensor 32 corresponds to a "steering angle detection unit" of the present invention.

The stroke sensor 31 is able to detect the stroke position of each of the four first hydraulic cylinders 6 and the four second hydraulic cylinders 7. The stroke position of the first hydraulic cylinder 6 is a detection value corresponding to a swing position of the first link 15. The stroke position of the second hydraulic cylinder 7 is a detection value corresponding to a swing position of the second link 16. In other words, the stroke sensor 31 detects the extension and contraction amounts of each of the first hydraulic cylinder 6 and the second hydraulic cylinder 7.

The inclination sensor 33 includes an inertial measurement unit (IMU) having a well-known configuration. The IMU has a three-axis acceleration sensor and a gyro sensor, and is able to detect a posture change state of the vehicle body 1, specifically, an inclination in the front-rear direction and the right-left direction. The inclination sensor 33 is configured to detect an inclination state of the loading portion 8. The inclination sensor 33 corresponds to an "inclination detection unit" of the present invention.

The ECU 13 is connected to the operation detector 22. The operation detector 22 receives each of a signal from the drive operation interface 21 and a wireless signal from the remote control device RC of the wireless communication method. The operation detector 22 is configured to detect a manual operation with respect to the four drive wheels 2 and the folding link mechanisms 5.

The ECU 13 includes a non-volatile memory (not illustrated) that stores a program corresponding to a functional unit described below, and a CPU (not illustrated) that executes the program. Functions of each functional unit are realized by executing the program by the CPU. The ECU 13 includes, as functional units, a posture controller 13A, a traveling controller 13B, an inclination angle calculator 13C, and the like.

The inclination angle calculator 13C calculates an inclination angle of the ground on which each of the four drive wheels 2 is grounded, based on detection information of the inclination sensor 33, the stroke positions of each of the four first hydraulic cylinders 6, and the stroke positions of the four second hydraulic cylinders 7. That is, the controller C is configured to calculate the inclination angle of the ground on which the four drive wheels 2 are grounded. The inclination angle calculator 13C corresponds to an "inclination detection unit" of the present invention.

The posture controller 13A is able to discriminate the swing posture of the first link 15 with respect to the vehicle body 1, the swing posture of the second link 16 with respect to the first link 15, and the like based on the detection value of the stroke sensor 31. As a result, it is possible to calculate a height from a ground portion of the drive wheel 2 to the vehicle body 1. When the vehicle body is moved and travels, the posture controller 13A executes horizontal control of controlling the operation of the support mechanism A such that the loading portion 8 of the vehicle body 1 is in a horizontal posture based on the detection information of the inclination sensor 33. In the horizontal control, the posture controller 13A controls the operations of the four first hydraulic cylinders 6 and the four second hydraulic cylinders 7 such that the inclination angle in the front-rear direction and the inclination angle in the right-left direction from the horizontal posture of the vehicle body 1 is a value corresponding to the horizontal posture, based on the detection information of the inclination sensor 33 and the detection information of the stroke sensor 31. As described above, the posture controller 13A of the controller C is configured (or programmed) such that to control the operation of each of the first hydraulic cylinder 6 and the second hydraulic cylinder 7 in the support mechanism A such that the loading portion 8 is in the horizontal posture, based on the inclination state of the vehicle body 1 (loading portion 8) and the extension and contraction amounts of each of the first hydraulic cylinder 6 and the second hydraulic cylinder 7.

The traveling controller 13B controls the supply and discharge of the hydraulic fluid of the hydraulic motor 4 such that the rotation speed of the drive wheel 2 is a target value, based on the rotation speed of the drive wheel 2 detected by the rotation sensor 34. In addition, the traveling controller 13B controls the supply (pressure) of the hydraulic fluid to the hydraulic motor 4 such that a drive torque of the drive wheel 2 has a target value, based on the pressure of the hydraulic fluid detected by the pressure sensor 35. The hydraulic control valve 12 is able to change the supply and discharge amounts of the hydraulic fluid with respect to the hydraulic motor 4. The traveling controller 13B executes a switching operation of the hydraulic control valve 12 that supplies and discharges the hydraulic fluid with respect to the hydraulic motor 4.

In addition, the traveling controller 13B is configured (or programmed) to change the orientation of the drive wheel 2 based on the detection value of the stroke sensor 32. Specifically, the traveling controller 13B executes the switching operation of the hydraulic control valve 12 that supplies and discharges the hydraulic fluid with respect to the turning cylinder 20. The traveling controller 13B is configured (or programmed) to perform control of changing each orientation of the four drive wheels 2 separately.

### [Control When Stopped in First Embodiment]

When the vehicle body 1 is stopped, the traveling controller 13B performs control of causing the hydraulic control valve 12 to block the supply and discharge of the hydraulic fluid with respect to the hydraulic motor 4. When the supply and discharge of the hydraulic fluid with respect to the hydraulic motor 4 is blocked, the hydraulic motor 4 is stopped. In this case, the hydraulic fluid inside the hydraulic motor 4 does not flow. Therefore, the hydraulic motor 4 cannot rotate, and the rotation of each of the four drive wheels 2 is stopped. That is, the traveling controller 13B of the controller C does not supply the drive energy to the four hydraulic motors 4 and thus the four drive wheels 2 while the four drive wheels 2 are stopped. Since the hydraulic control valve 12 is blocked, the hydraulic fluid inside the hydraulic motor 4 cannot enter or exit. As a result, each of the four drive wheels 2 is locked by the hydraulic fluid inside the hydraulic motor 4, and the vehicle body 1 is able to maintain the stopped state. As described above, the traveling controller 13B of the controller C is configured (or programmed) such that the drive control of the hydraulic motor 4 is stopped by closing the hydraulic control valve 12 when the vehicle is stopped and blocking the supply and discharge of the hydraulic fluid with respect to the hydraulic motor 4.

However, the hydraulic fluid inside the hydraulic motor 4 may leak little by little from the hydraulic control valve 12 with the passage of time. In this case, each of the four drive wheels 2 cannot maintain the locked state with the hydraulic fluid inside the hydraulic motor 4. In particular, in the inclined land, when the hydraulic fluid inside the hydraulic motor 4 leaks, there is a concern that each of the four drive wheels 2 gradually rotates due to a self-weight of the work vehicle, and the stop position of the vehicle body 1 is not maintained. In order to avoid such inconvenience, in the first embodiment, the traveling controller 13B is configured (or programmed) such that the respective orientations of the four drive wheels 2 are different from each other when the vehicle body 1 is stopped.

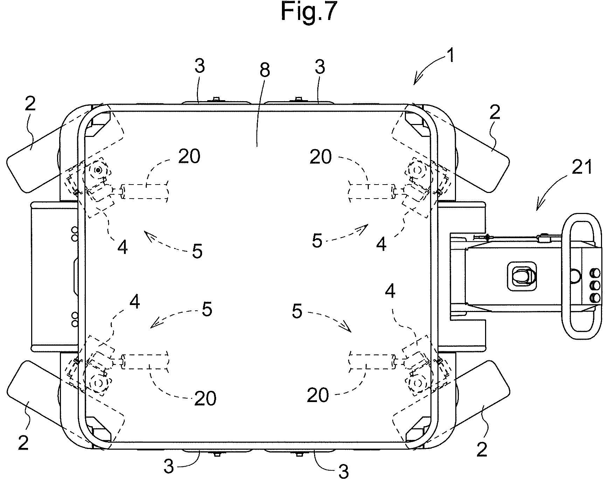

Specifically, as illustrated in Fig. 7, the orientation of each of the four drive wheels 2 is changed when the vehicle body 1 is stopped. That is, the traveling controller 13B in the controller C is configured (or programmed) such that all the orientations of the four drive wheels 2 are different from each other when the drive control of the drive wheels 2 is stopped.

In the example illustrated in Fig. 7, among the right and left drive wheels 2 located below the front portion of the vehicle body 1, the drive wheel 2 on the right side is turned counterclockwise and the drive wheel 2 on the left side is turned clockwise. Therefore, in each of the right and left drive wheels 2 located below the front portion of the vehicle body 1, the front portion of each of the right and left drive wheels 2 is located on the right and left center side of the vehicle body 1 with respect to the rear portion of each of the right and left drive wheels 2.

In addition, among the right and left drive wheels 2 located below the rear portion of the vehicle body 1, the drive wheel 2 on the right side is turned clockwise, and the drive wheel 2 on the left side is turned counterclockwise. Therefore, in each of the right and left drive wheels 2 located below the rear portion of the vehicle body 1, the rear portion of each of the right and left drive wheels 2 is located on the right and left center side of the vehicle body 1 with respect to the front portion of each of the right and left drive wheels 2.

Each orientation of the four drive wheels 2 is changed by the contraction operation of the turning cylinder 20. A cap-side end portion of the turning cylinder 20 is located on the front and rear center side of the vehicle body 1 with respect to the rod-side end portion of the turning cylinder 20. From this, when the drive control of the drive wheel 2 is stopped, the traveling controller 13B controls the respective four turning cylinders 20 to operate on the contraction side from the neutral stroke position. By this method, the traveling controller 13B of the controller C is configured (or programmed) such that the respective orientations of the four drive wheels 2 are different from each other to make an end portion of the drive wheel 2 on a side located on the outer side in the front and rear with respect to the vehicle body 1 is located closer to the right and left center side of the vehicle body 1 than an end portion of the drive wheel 2 on a side located on the inner side in the front and rear with respect to the vehicle body 1.

As described above, the traveling controller 13B in the controller C is configured (or programmed) such that the respective orientations of the drive wheel 2 located on one of the right and left sides, and the drive wheel 2 located on the other of the right and left sides are different from each other to make the orientations opposite to each other with respect to the neutral orientation in which the vehicle body 1 is caused to move straight or substantially straight when the drive control of the drive wheels 2 is stopped. In addition, the traveling controller 13B in the controller C is configured (or programmed) such that the respective orientations of the drive wheel 2 located on one of the front and rear sides, and the drive wheel 2 located on the other of the front and rear sides are different from each other in the front and rear drive wheels 2 in each of one of the right and left sides and the other of the right and left sides, when the drive control of the drive wheels 2 is stopped.

From this, each of the four drive wheels 2 interacts a force with each other in directions different from the rotation directions, and receives a reaction force in a lateral skidding direction from the ground. That is, when the four drive wheels 2 are about to roll, friction occurs between each of the drive wheels 2 and the ground. As a result, each of the four drive wheels 2 does not rotate. Accordingly, for example, even in a case where the work vehicle is stopped for a long period of time on the inclined land, the stop position of the work vehicle is maintained. In addition, in a case where the vehicle body 1 performs neutral turning, the traveling controller 13B is able to quickly change the orientation of each of the four drive wheels 2 to an orientation along a tangential direction on the same arc of a circle having the center of the vehicle body 1 as a circle center.

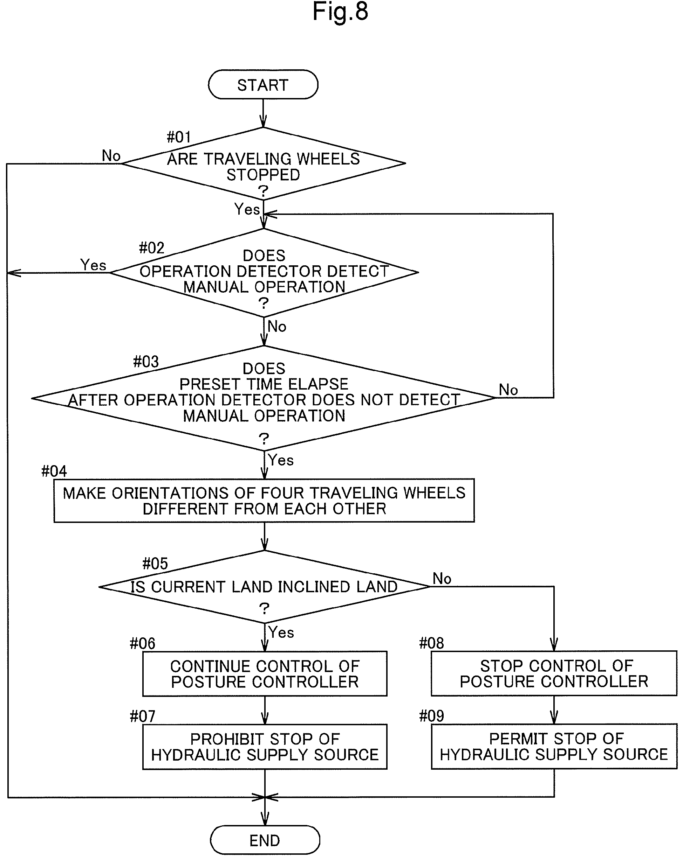

Control when the vehicle body 1 is stopped will be described based on a flowchart of Fig. 8. First, the ECU 13 determines whether the four drive wheels 2 are stopped (step #01). In a case where the four drive wheels 2 are stopped (Yes in step #01), the ECU 13 determines whether the operation detector 22 detects the manual operation from the drive operation interface 21 or the remote control device RC (step #02). When the operation detector 22 does not detect the manual operation (No in step #02), the ECU 13 counts a timer and determines whether a preset time elapses after the operation detector 22 does not detect the manual operation (step #03). The determination of step #03 is repeated until the count time of the timer elapses the preset time. Then, when the count time of the timer elapses the preset time (Yes in step #03), the traveling controller 13B is configured (or programmed) such that the respective orientations of the four drive wheels 2 are different from each other (step #04). That is, the traveling controller 13B of the controller C is configured (or programmed) such that the respective orientations of one of the right and left drive wheels 2 and the other of the right and left drive wheels 2 are different from each other when the preset time elapses after the operation detector 22 does not detect the manual operation.

When the processing of step #04 is completed, the ECU 13 determines whether a current land of the vehicle body 1 is the inclined land based on the detection information of the inclination sensor 33 (step #05). Specifically, the ECU 13 determines whether the inclination angle of the ground calculated by the inclination angle calculator 13C is equal to or greater than a preset set inclination angle. When the inclination angle of the ground is equal to or greater than the set inclination angle, the ECU 13 determines that the current land of the vehicle body 1 is the inclined land. In addition, when the inclination angle of the ground is less than the set inclination angle, the ECU 13 determines that the current land of the vehicle body 1 is a flat land.

When the current land of the vehicle body 1 is the inclined land (Yes in step #05), the ECU 13 continues the control of the posture controller 13A (step #06) and prohibits the drive stop of the hydraulic supply source 9 (step #07). When the control of the posture controller 13A is stopped on the inclined land, the hydraulic control valve 12 for the first hydraulic cylinder 6 and the second hydraulic cylinder 7 is closed, and the stroke positions of the first hydraulic cylinder 6 and the second hydraulic cylinder 7 are maintained. Therefore, immediately after the stop of the control of the posture controller 13A, the horizontal state of the loading portion 8 is maintained. However, the hydraulic fluid inside each of the first hydraulic cylinder 6 and the second hydraulic cylinder 7 leaks from the hydraulic control valve 12 with the passage of time. In this case, the folding link mechanism 5 is gradually lowered due to the self-weight of the loading portion 8, and the loading portion 8 is gradually inclined along the inclined surface, and the horizontal state of the loading portion 8 is not maintained. In order to avoid such inconvenience, in a case where the current land of the vehicle body 1 is the inclined land, the control of the posture controller 13A is continued, and the drive of the hydraulic supply source 9 is also continued. That is, the posture controller 13A of the controller C is configured (or programmed) such that the operation of each of the first hydraulic cylinder 6 and the second hydraulic cylinder 7 is continuously controlled in a case where the ground is inclined by equal to or greater than the set inclination angle while the four drive wheels 2 are stopped. Accordingly, even in a case where the drive wheel 2 is stopped on the inclined land, the horizontal state of the loading portion 8 is maintained.

When the current land of the vehicle body 1 is not the inclined land (No in step #05), the current land of the vehicle body 1 is a flat land. Therefore, the ECU 13 stops the control of the posture controller 13A (step #08) and permits the drive stop of the hydraulic supply source 9 (step #09). As described above, the hydraulic fluid inside each of the first hydraulic cylinder 6 and the second hydraulic cylinder 7 leaks from the hydraulic control valve 12 with the passage of time. Even in this case, since the land is flat, each of the plurality of folding link mechanisms 5 is lowered substantially equally, and the horizontal state of the loading portion 8 is maintained. Therefore, when the current land of the vehicle body 1 is the flat land, the stop of the control of the posture controller 13A and the drive stop of the hydraulic supply source 9 are allowed. Accordingly, it is possible to reduce a running cost as compared with a configuration in which the posture controller 13A of the controller C continuously controls the operation of the support mechanism A on the flat land. That is, the posture controller 13A of the controller C is configured (or programmed) such that the operation of each of the first hydraulic cylinder 6 and the second hydraulic cylinder 7 is not controlled in a case where the ground is inclined within a range of the set inclination angle while the four drive wheels 2 are stopped.

As described above, the controller C is configured such that the operation of the support mechanism A is not controlled, and is configured (or programmed) such that the drive stop of the hydraulic supply source 9 is permitted in a case where the ground is inclined within the range of the preset set inclination angle while the four drive wheels 2 are stopped. On the other hand, the controller C is configured such that the operation of the support mechanism A is continuously controlled, and is configured (or programmed) such that the drive stop of the hydraulic supply source 9 is prohibited in a case where the ground is inclined by equal to or greater than the set inclination angle while the four drive wheels 2 are stopped.

The above is the first embodiment. Hereinafter, a second embodiment in which the present invention for achieving the second object is exemplified will be described with reference to Figs. 9 to 16.

### [Second Embodiment]

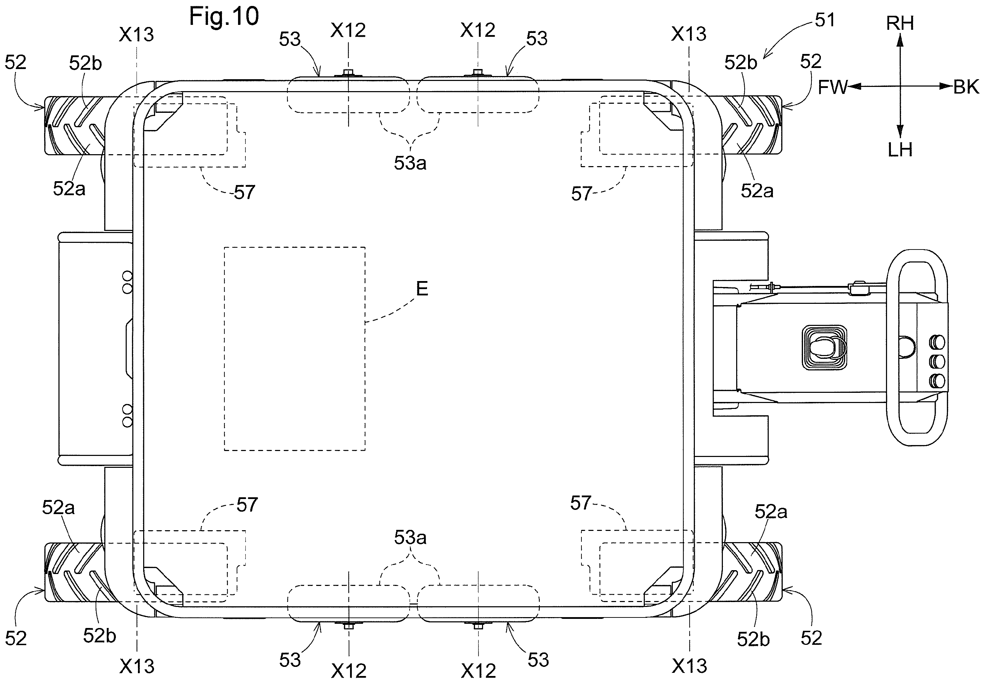

Figs. 9 and 10 illustrate a work vehicle. As illustrated in Figs. 9 and 10, the work vehicle is a work vehicle that is able to travel on an irregular land (a portion having a step or unevenness). The work vehicle includes a vehicle body 51 (vehicle main body), a plurality of (four in the second embodiment) drive wheels 52 (traveling wheels), a plurality of (four in the second embodiment) auxiliary wheels 53, a plurality of (four in the second embodiment) support legs 54, an engine E, a hydraulic pump (not illustrated), and a plurality of (four in the second embodiment) hydraulic motors M. A load is able to be placed on an upper surface of the vehicle body 51.

The engine E is provided below the vehicle body 51. The hydraulic pump pumps the hydraulic fluid to the hydraulic motor M, a first hydraulic cylinder CY1, a second hydraulic cylinder CY2, and a third hydraulic cylinder CY3, which will be described later in detail. The hydraulic pump is driven by the engine E.

The four drive wheels 52 include a drive wheel 52 on the left front side, a drive wheel 52 on the right front side, a drive wheel 52 on the left rear side, and a drive wheel 52 on the right rear side. The four auxiliary wheels 53 include an auxiliary wheel 53 on the left front side, an auxiliary wheel 53 on the right front side, an auxiliary wheel 53 on the left rear side, and an auxiliary wheel 53 on the right rear side.

The support leg 54 supports the drive wheel 52 and the auxiliary wheel 53. The four support legs 54 include a support leg 54 on the left front side, a support leg 54 on the right front side, a support leg 54 on the left rear side, and a support leg 54 on the right rear side. The support leg 54 on the left front side supports the drive wheel 52 on the left front side and the auxiliary wheel 53 on the left front side. The support leg 54 on the right front side supports the drive wheel 52 on the right front side and the auxiliary wheel 53 on the right front side. The support leg 54 on the left rear side supports the drive wheel 52 on the left rear side and the auxiliary wheel 53 on the left rear side. The support leg 54 on the right rear side supports the drive wheel 52 on the right rear side and the auxiliary wheel 53 on the right rear side.

The support leg 54 on the left front side is connected to a left side portion in a front portion of the vehicle body 51. The support leg 54 on the right front side is connected to a right side portion in the front portion of the vehicle body 51. The support leg 54 on the left rear side is connected to a left side portion in a rear portion of the vehicle body 51. The support leg 54 on the right rear side is connected to a right side portion of the rear portion of the vehicle body 51.

The support leg 54 is what is called a folding link mechanism and is configured to be refracted (extend and contract). The support leg 54 includes a first link 55, a second link 56, a first hydraulic cylinder CY1, a second hydraulic cylinder CY2, and a third hydraulic cylinder CY3. The first hydraulic cylinder CY1, the second hydraulic cylinder CY2, and the third hydraulic cylinder CY3 are driven to be extended and/or contracted by the hydraulic fluid from the hydraulic pump.

The first link 55 is swingably connected to the vehicle body 51 around a swing axis center X11 extending along a vehicle body right-left direction. The second link 56 is swingably connected to an end portion of the first link 55 on a side opposite to the vehicle body 51 around a swing axis center X12 extending along the vehicle body right-left direction.

The first hydraulic cylinder CY1 swing-drives the first link 55 around the swing axis center X11. The first hydraulic cylinder CY1 is provided between the vehicle body 51 and the first link 55. The first hydraulic cylinder CY1 extends and/or contracts, and thereby the first link 55 is swing-driven around the swing axis center X11.

The second hydraulic cylinder CY2 swing-drives the second link 56 around the swing axis center X12. The second hydraulic cylinder CY2 is provided between the first link 55 and the second link 56. The second hydraulic cylinder CY2 extends and/or contracts, and thereby the second link 56 is swing-driven around the swing axis center X12.

The drive wheels 52 cause the vehicle body 51 to travel. The drive wheel 52 is rotatable around a rotation axis center X13 extending along the vehicle body right-left direction. The drive wheel 52 is rotationally driven by the hydraulic motor M. The hydraulic motor M is rotationally driven by the hydraulic fluid from the hydraulic pump. The drive wheel 52 is operated to steer around a steering axis center Z1. The third hydraulic cylinder CY3 steering-drives the drive wheel 52 around the steering axis center Z1. The drive wheel 52 is supported at an end portion of the second link 56 on a side opposite to the swing axis center X12. A support portion 56a that supports the drive wheel 52 is provided at an end portion of the second link 56 on a side opposite to the swing axis center X12.

The auxiliary wheel 53 assists the traveling of the vehicle body 51. The auxiliary wheel 53 is rotatable around a rotation axis center (the same as the swing axis center X12) extending along the vehicle body right-left direction. The auxiliary wheel 53 is disposed outward in the lateral direction of the support leg 54 in the vehicle body right-left direction.

The four drive wheels 52 are each covered from above by a mudguard member 57. That is, the work vehicle includes a plurality (four in the second embodiment) of mudguard members 57 that covers the respective four drive wheels 52 from above. The four mudguard members 57 include a mudguard member 57 on the left front side, a mudguard member 57 on the right front side, a mudguard member 57 on the left rear side, and a mudguard member 57 on the right rear side. The mudguard member 57 on the left front side covers the drive wheel 52 on the left front side from above. The mudguard member 57 on the right front side covers the drive wheel 52 on the right front side from above. The mudguard member 57 on the left rear side covers the drive wheel 52 on the left rear side from above. The mudguard member 57 on the right rear side covers the drive wheel 52 on the right rear side from above.

The mudguard member 57 is formed in a shape along an outer peripheral shape of the drive wheel 52. Specifically, the mudguard member 57 is formed in an arc shape or a substantially arc shape in a side view. The mudguard member 57 is disposed above the rotation axis center X13 of the drive wheel 52. The mudguard members 57 on the front side and the mudguard members 57 on the rear side are disposed front-rear symmetrically. Specifically, the mudguard members 57 on the front side are disposed on a vehicle body inner side (rear side) with respect to the rotation axis center X13 of the drive wheels 52 on the front side in the vehicle body front-rear direction, and the mudguard members 57 on the rear side are disposed on a vehicle body inner side (front side) with respect to the rotation axis center X13 of the drive wheels 52 on the rear side in the vehicle body front-rear direction.

The mudguard member 57 is supported by the support leg 54. Specifically, the mudguard member 57 is supported by the second link 56. That is, the mudguard member 57 is integrated with the second link 56 of the support leg 54. A portion of the second link 56 to which the mudguard member 57 is attached is formed in a shape (an arc shape or a substantially arc shape) along the second link 56 in a side view. A gap G is present between the drive wheel 52 and the mudguard member 57.

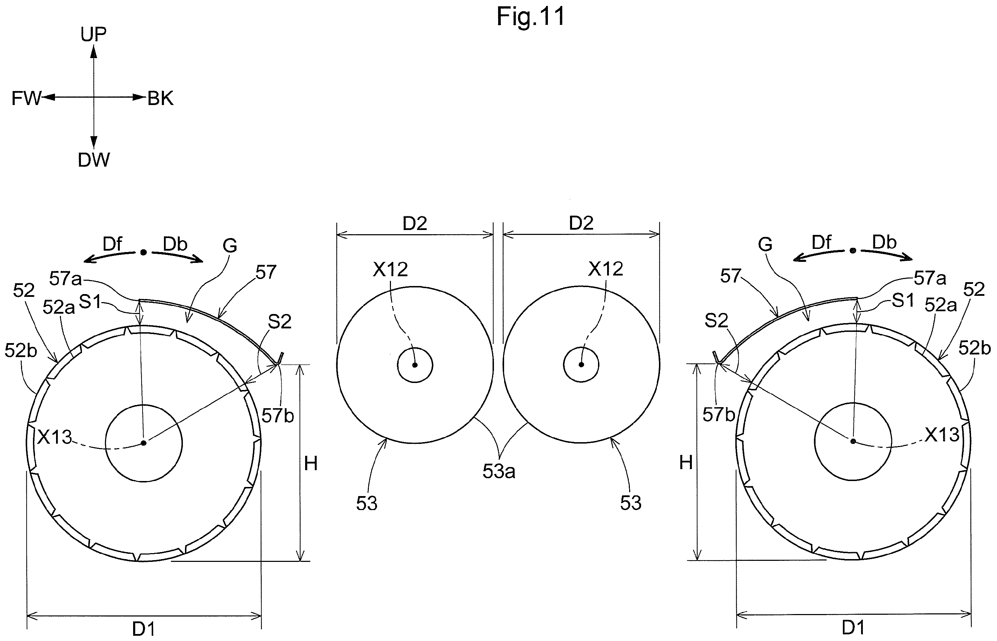

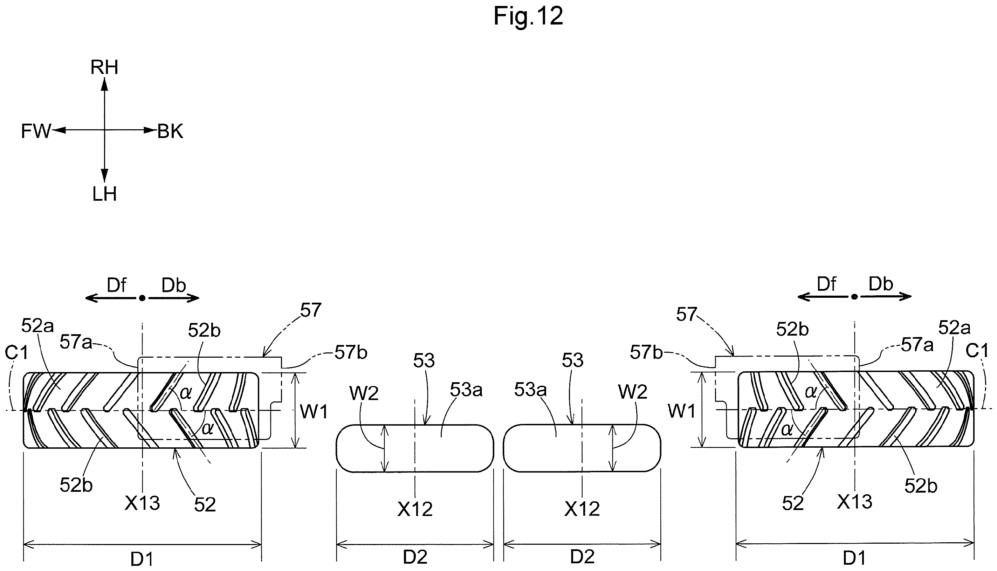

In Figs. 11 and 12, an outer diameter D1 of the drive wheel 52, an outer diameter D2 of the auxiliary wheel 53, a rotation direction Df of the drive wheel 52 during forward movement of the work vehicle, a rotation direction Db of the drive wheel 52 during backward movement of the work vehicle, an outer end 57a of the mudguard member 57 on a vehicle body outer side in the vehicle body front-rear direction, and an inner end 57b of the mudguard member 57 on the vehicle body inner side in the vehicle body front-rear direction are denoted. In the mudguard members 57 on the front side (the left front side and the right front side), the outer end 57a means a front end, and the inner end 57b means a rear end. In addition, in the mudguard members 57 on the rear side (the left rear side and the right rear side), the outer end 57a means a rear end, and the inner end 57b means a front end.

In Fig. 11, an interval (first interval S1) between the outer end 57a and the outer periphery of the drive wheel 52 on a straight line connecting the outer end 57a and the rotation axis center X13 of the drive wheel 52, an interval (second interval S2) between the inner end 57b and the outer periphery of the drive wheel 52 on a straight line connecting the inner end 57b and the rotation axis center X13 of the drive wheel 52, and a height H from the lower end of the drive wheel 52 to the inner end 57b are denoted. In Fig. 12, a width of the drive wheel 52 is denoted by W1, and a width of the auxiliary wheel 53 is denoted by W2.

As illustrated in Figs. 11 and 12, the outer diameter D2 of the auxiliary wheel 53 is smaller than the outer diameter D1 of the drive wheel 52. In other words, the outer diameter D1 of the drive wheel 52 is larger than the outer diameter D2 of the auxiliary wheel 53. The width W2 of the auxiliary wheel 53 is smaller than the width W1 of the drive wheel 52. In other words, the width W1 of the drive wheel 52 is larger than the width W2 of the auxiliary wheel 53.

The outer end 57a is located at the same or substantially the same position as the rotation axis center X13 of the drive wheel 52 in the vehicle body front-rear direction. The inner end 57b is located above the rotation axis center X13 of the drive wheel 52 and is located on the vehicle body inner side with respect to the end of the drive wheel 52 on the vehicle body inner side in the vehicle body front-rear direction. The height H is higher than a height from the lower end of the drive wheel 52 to the rotation axis center X13 of the drive wheel 52. The second interval S2 is larger than the first interval S1. That is, the gap G gradually increases from the vehicle body outer side toward the vehicle body inner side in the vehicle body front-rear direction.

A large number of lugs 52b is formed on a tread portion 52a of the drive wheel 52. A tread portion 53a of the auxiliary wheel 53 is formed in a shape different from the tread portion 52a of the drive wheel 52. Specifically, a large number of lugs is not formed on the tread portion 53a of the auxiliary wheel 53. That is, a large number of lugs 52b is formed only in the tread portion 52a of the drive wheel 52 among the tread portion 52a of the drive wheel 52 and the tread portion 53a of the auxiliary wheel 53.

In Fig. 12, an inclination angle of the lug 52b with respect to a width center C1 of the drive wheel 52 is denoted by α. The lugs 52b are formed in a shape inclined with respect to a circumferential direction of the drive wheel 52. In Fig. 12, the inclination angle with respect to the width center C1 of the drive wheel 52 is α even for the lug 52b other than the lug 52b at which the inclination angle α is illustrated.

As illustrated in Fig. 12, a large number of lugs 52b includes a large number of lugs 52b located on the vehicle body outer side (hereinafter, simply referred to as the "vehicle body outer side") in the vehicle body right-left direction with respect to the width center C1 of the drive wheel 52, and a large number of lugs 52b located on the vehicle body inner side (hereinafter, simply referred to as the "vehicle body inner side") in the vehicle body right-left direction with respect to the width center C1 of the drive wheel 52. A large number of lugs 52b located on the vehicle body outer side and a large number of lugs 52b located the vehicle body inner side are misaligned in the circumferential direction of the drive wheel 52. The tread portion 52a of the drive wheels 52 on the front side and the tread portion 52a of the drive wheels 52 on the rear side are configured to be front-rear symmetrical. Specifically, a large number of lugs 52b in the drive wheels 52 on the front side and a large number of lugs 52b in the drive wheels 52 on the rear side are arranged front-rear symmetrically. Specifically, a large number of lugs 52b in the drive wheels 52 on the front side and a large number of lugs 52b in the drive wheels 52 on the rear side are arranged as follows.

The lugs 52b in the drive wheels 52 on the front side are inclined to be closer to the width center C1 of the drive wheel 52 as the downstream side in the rotation direction of the rotation direction Df of the drive wheel 52 when the work vehicle moves forward. In other words, the lugs 52b in the drive wheels 52 on the front side are inclined to be farther away from the width center C1 of the drive wheel 52 as the downstream side in the rotation direction of the rotation direction Db of the drive wheel 52 when the work vehicle moves backward.

The lugs 52b in the drive wheels 52 on the rear side are inclined to be closer to the width center C1 of the drive wheel 52 as the downstream side in the rotation direction of the rotation direction Db of the drive wheel 52 when the work vehicle moves backward. In other words, the lugs 52b in the drive wheels 52 on the rear side are inclined to be farther away from the width center C1 of the drive wheel 52 as the downstream side in the rotation direction of the rotation direction Df of the drive wheel 52 when the work vehicle moves forward.

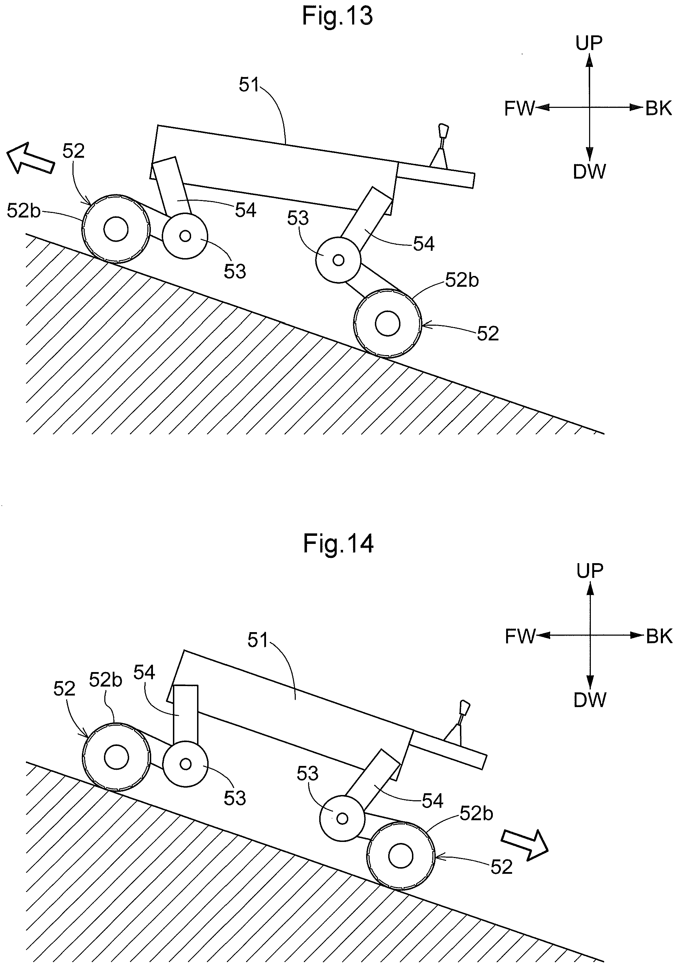

With such a configuration, as illustrated in Fig. 13, in a case where the work vehicle moves forward on an uphill slope, the load is able to be concentrated on the drive wheel 52 on the left front side and the drive wheel 52 on the right front side, and a grip force by the drive wheel 52 on the left front side and the drive wheel 52 on the right front side is able to be improved. In addition, as illustrated in Fig. 14, in a case where the work vehicle moves backward on a downhill slope, the load is able to be concentrated on the drive wheel 52 on the left rear side and the drive wheel 52 on the right rear side, and a grip force by the drive wheel 52 on the left rear side and the drive wheel 52 on the right rear side is able to be improved.

In the second embodiment, as described above, the tread portions 52a of the drive wheels 52 on the front side and the tread portion 52a of the drive wheels 52 on the rear side are configured to be front-rear symmetrical, and the mudguard members 57 on the front side and the mudguard members 57 on the rear side are disposed front-rear symmetrically. Accordingly, the work vehicle is able to be used as the forward movement direction in any direction of the arrow "FW" and the arrow "BK".

### [Other Embodiments]

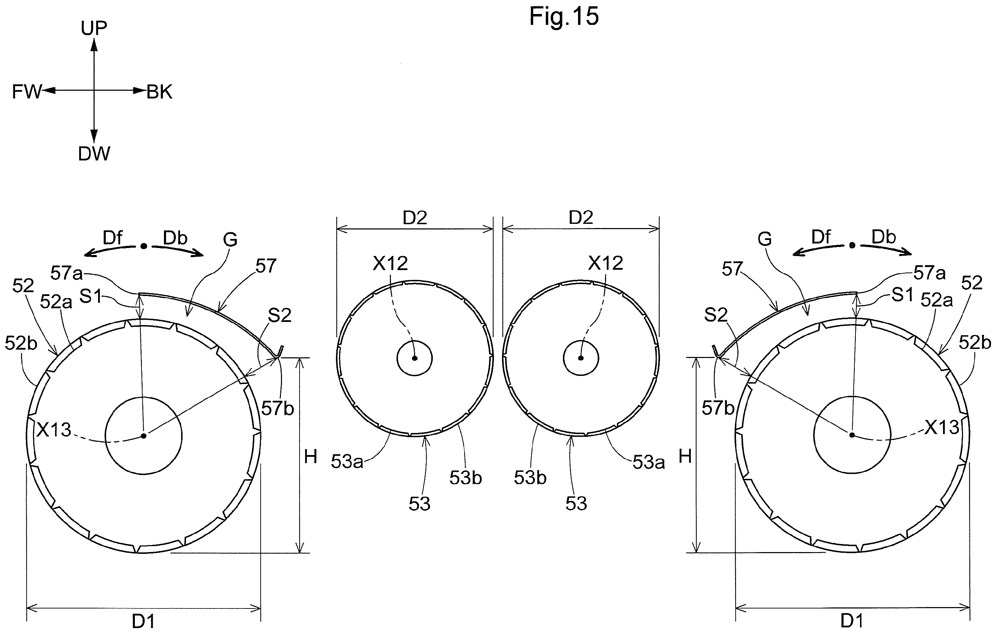

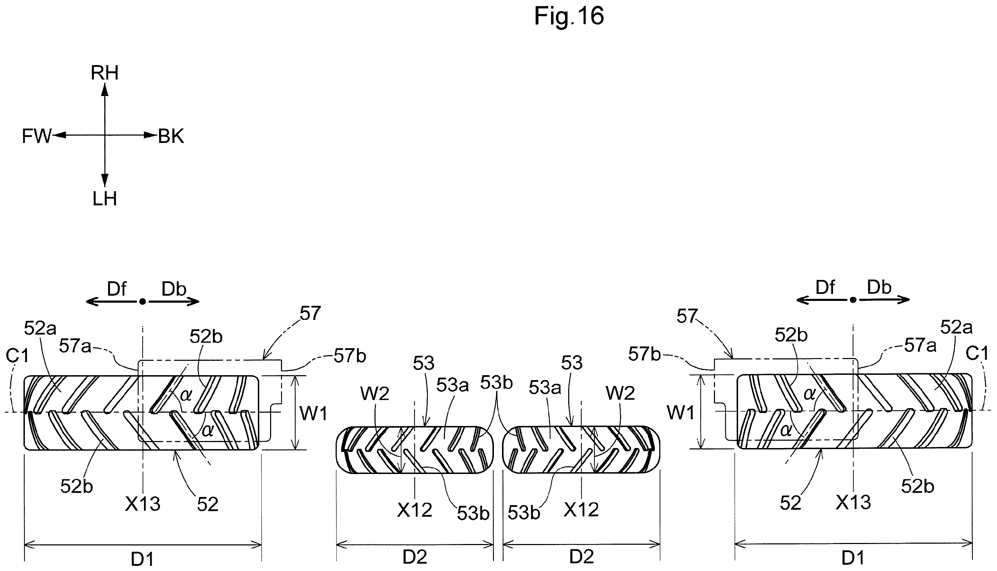

The present invention is not limited to the configurations exemplified in the first embodiment and the second embodiment. Hereinafter, representative other embodiments of the present invention will be exemplified.
(1) In the first embodiment, when the controller C stops the drive control of the drive wheels 2, the controller C changes the orientations of all four drive wheels 2 separately. The present invention is not limited to this embodiment, and for example, the controller C may also be configured to change the respective orientations of one to three among the four drive wheels 2 separately. For example, the controller C may also be configured such that the respective orientations of two drive wheels 2 (the first drive wheel and the second drive wheel) located on the lower side among the four drive wheels 2 are different from each other based on the inclination state of the vehicle body 1. For example, the controller C may also be configured such that the respective orientations of the drive wheel 2 (first drive wheel) located on the lower side on one of the front and rear sides on one of the right and left sides and the drive wheel 2 (second drive wheel) located on the lower side on one of the front and rear sides on the other of the right and left sides among the four drive wheels 2 are different from each other based on the inclination state of the vehicle body 1.
(2) The support mechanism A illustrated in the first embodiment may also be a mechanism including one link (support leg) or three or more links. For example, the support mechanism A may include an electric actuator as a device that changes the posture. The support leg 54 illustrated in the second embodiment may also include an electric actuator as a device that changes the posture.
(3) The drive wheel 2 illustrated in the first embodiment may also be driven by an electric motor instead of the hydraulic motor 4, or may also be driven by the engine 9a or the like via a drive mechanism. The drive wheel 52 illustrated in the second embodiment may also be driven by an electric motor or may also be driven by an engine or the like via a drive mechanism.
(4) The drive wheel 2 illustrated in the first embodiment may also be turning-driven by a hydraulic motor, an electric motor, or the like instead of the turning cylinder 20. The drive wheel 52 illustrated in the second embodiment may also be turning-driven by a hydraulic motor, an electric motor, or the like instead of the third hydraulic cylinder CY3.
(5) In the first embodiment, the drive operation interface 21 is provided behind the loading portion 8 in the vehicle body 1. For example, a configuration may also be adopted in which the drive operation interface 21 is not provided. In this case, the operation detector 22 may also be configured to receive only the wireless signal from the remote control device RC of the wireless communication method. Alternatively, the operation detector 22 may also be configured to receive only the signal from the drive operation interface 21.
(6) The configuration may also be adopted in which the support mechanism A of the first embodiment is not provided. In this case, the loading portion 8 is not maintained in the horizontal posture on the inclined land, but as long as a configuration is provided in which the orientations of the first drive wheel and the second drive wheel are different from each other on the inclined land, a concern that the work vehicle gradually descends the inclined land due to the self-weight of the work vehicle is avoided.
(7) In the first embodiment, the controller C is configured (or programmed) such that the respective orientations of the first drive wheel and the second drive wheel are different from each other when a preset time elapses from a time when the operation detector 22 does not detect the manual operation. The present invention is not limited to this embodiment, and for example, the controller C may also be configured to immediately make the respective orientations of the first drive wheel and the second drive wheel different from each other when the operation detector 22 does not detect the manual operation.
(8) In the first embodiment, the support mechanism A includes the folding link mechanism 5 (support leg). The present invention is not limited to this embodiment, and for example, a configuration may also be adopted in which the support mechanism A includes a slide mechanism that is able to be lifted and lowered up and down instead of the folding link mechanism 5.
(9) In the first embodiment, the inclination sensor 33 is provided as the inclination detection unit. The present invention is not limited to this embodiment, and for example, the inclination detection unit may also be a mechanical pendulum type sensor or a magnetic sensor.
(10) In the first embodiment, the ECU 13 determines whether the inclination angle of the ground calculated by the inclination angle calculator 13C is equal to or greater than a preset set inclination angle. Then, when the inclination angle of the ground is equal to or greater than the set inclination angle, the ECU 13 determines that the current land of the vehicle body 1 is the inclined land. The present invention is not limited to this embodiment, and "equal to or greater than the set inclination angle" means an inclination angle greater than the set inclination angle without including the set inclination angle. The configuration may also be adopted in which the ECU 13 does not determine that the current land of the vehicle body 1 is the inclined land and determines that the current land of the vehicle body 1 is the flat land in a case where the inclination angle of the ground is the set inclination angle.
(11) In the second embodiment, a large number of lugs is not formed on the tread portion 53a of the auxiliary wheel 53. That is, a large number of lugs 52b is formed only in the tread portion 52a of the drive wheel 52 among the tread portion 52a of the drive wheel 52 and the tread portion 53a of the auxiliary wheel 53. As illustrated in Figs. 15 and 16, a large number of lugs 53b may be formed on the tread portion 53a of the auxiliary wheel 53. That is, a large number of lugs 52b and 53b may also be formed on the tread portion 52a of the drive wheel 52 and the tread portion 53a of the auxiliary wheel 53, respectively.
   A height of the lug 53b of the auxiliary wheel 53 is lower than a height of the lug 52b of the drive wheel 52. That is, the tread portion 53a of the auxiliary wheel 53 is formed in a shape different from the tread portion 52a of the drive wheel 52. A large number of lugs 53b in the auxiliary wheels 53 on the front side and a large number of lugs 52b in the auxiliary wheels 53 on the rear side are arranged front-rear symmetrically.
(12) In the second embodiment, a large number of lugs 52b in the drive wheels 52 on the front side and a large number of lugs 52b in the drive wheels 52 on the rear side are arranged front-rear symmetrically. A large number of lugs 52b in the drive wheels 52 on the front side and a large number of lugs 52b in the drive wheels 52 on the rear side may be arranged front-rear asymmetrically.
   For example, in a case where the work vehicle is used with the direction of the arrow "FW" as the forward movement direction and the direction of the arrow "BK" as the backward movement direction, the orientation of a large number of lugs 52b in the drive wheels 52 on the rear side may be the same as the orientation of a large number of lugs 52b in the drive wheels 52 on the front side, and the mudguard members 57 on the rear side may be disposed on the vehicle body outer side (rear side) with respect to the rotation axis center X13 of the drive wheels 52 on the rear side in the vehicle body front-rear direction. In addition, in a case where the work vehicle is used with the direction of the arrow "BK" as the forward movement direction and the direction of the arrow "FW" as the backward movement direction, the orientation of a large number of lugs 52b on the drive wheels 52 on the front side may be the same as the orientation of a large number of lugs 52b on the drive wheels 52 on the rear side, and the mudguard members 57 on the front side may be disposed on the vehicle body outer side (front side) with respect to the rotation axis center X13 of the drive wheels 52 on the front side in the vehicle body front-rear direction.
(13) In the second embodiment, the drive wheel 52 is formed in a shape inclined at the inclination angle α. The shape of the drive wheel 52 is not limited to the above-described embodiment.
(14) In the second embodiment, the outer diameter D2 of the auxiliary wheel 53 is smaller than the outer diameter D1 of the drive wheel 52. The outer diameter D2 of the auxiliary wheel 53 may be the same as the outer diameter D1 of the drive wheel 52.
(15) In the second embodiment, the mudguard member 57 is formed in a shape along the outer peripheral shape of the drive wheel 52. The mudguard member 57 may not be formed in the shape along the outer peripheral shape of the drive wheel 52.
(16) In the second embodiment, the mudguard member 57 is disposed above the rotation axis center X13 of the drive wheel 52. The mudguard member 57 may not be disposed above the rotation axis center X13 of the drive wheel 52. That is, a part of the mudguard member 57 may be located below the rotation axis center X13 of the drive wheel 52.
(17) In the second embodiment, the mudguard member 57 is supported by the support leg 54. The mudguard member 57 may be supported by a member different from the support leg 54.
(18) In the first embodiment and the second embodiment, the work vehicle includes the four drive wheels 2 and 52. The number of the drive wheels 2 is not limited to four, and may also be two, three, or five or more. The number of the drive wheels 52 is not limited to four, and may also be two, three, or five or more.
(19) In the first embodiment and the second embodiment, the work vehicle includes the four auxiliary wheels 3 and 53. The number of the auxiliary wheels 3 is not limited to four and may also be two, three, or five or more. The number of the auxiliary wheels 53 is not limited to four, and may also be two, three, or five or more.
(20) In the first embodiment, the work vehicle includes the four folding link mechanisms 5 (support legs). The number of the folding link mechanisms 5 is not limited to four, and may also be two, three, or five or more. In the second embodiment, the work vehicle includes the four support legs 54. The number of the support legs 54 is not limited to four and may also be two, three, or five or more.

The configurations disclosed in the above-described embodiments (including the first embodiment, the second embodiment, and other separate embodiments thereof, the same applies hereinafter) are able to be applied in combination with the configurations disclosed in other embodiments as long as there is no contradiction. In addition, the embodiments disclosed in the present specification are examples, and the embodiments of the present invention are not limited to these, and it is possible to appropriately modify the embodiments of the present invention within a range not departing from the object of the present invention.

### Industrial Applicability

The present invention is able to be applied to a work vehicle.

### Description of Reference Numerals

### [First Embodiment]

1: vehicle body
2: drive wheel (first drive wheel, second drive wheel)
4: hydraulic motor
8: loading portion
12: hydraulic control valve (control valve)
13B: inclination angle calculator (inclination detection unit)
22: operation detector
32: stroke sensor (steering angle detection unit)
33: inclination sensor (inclination detection unit)
A: support mechanism
C: controller
[Second Embodiment]
51: vehicle body
52: drive wheel
52a: tread portion
52b: lug
53: auxiliary wheel
53a: tread portion
53b: lug
54: support leg
57: mudguard member
D1: outer diameter
D2: outer diameter
X13: rotation axis center

## Claims

1. A work vehicle, comprising:
a vehicle body having a loading portion that is able to load a load;
a plurality of drive wheels each located in front and rear on both right and left sides of the vehicle body, and configured to be steered separately;
a steering angle detection unit configured to detect respective orientations of the plurality of drive wheels; and
a controller configured to perform drive control for driving each of the plurality of drive wheels and control for changing the respective orientations of the plurality of drive wheels separately,
wherein the controller is configured such that the respective orientations of a first drive wheel located on one of right and left sides of the vehicle body among the plurality of drive wheels and a second drive wheel located on the other of the right and left sides of the vehicle body among the plurality of drive wheels are different from each other when the drive control is stopped.

2. The work vehicle according to claim 1, wherein the controller is configured such that the respective orientations of the first drive wheel and the second drive wheel are different from each other to make the respective orientations opposite to each other with respect to the neutral orientation in which the vehicle body is caused to move straight or substantially straight when the drive control is stopped.

3. The work vehicle according to claim 1 or 2, wherein the controller is configured such that the orientations of all the plurality of drive wheels are different from each other when the drive control is stopped.

4. The work vehicle according to claim 1 or 2, further comprising:
an inclination detection unit configured to detect an inclination state of the vehicle body,
wherein the controller is configured such that the respective orientations of the first drive wheel located on a lower side in one of the right and left sides among the plurality of drive wheels and the second drive wheel located on a lower side on the other of the right and left sides among the plurality of drive wheels are different from each other based on the inclination state of the vehicle body.

5. The work vehicle according to any one of claims 1 to 4, further comprising:
an operation detector configured to detect a manual operation with respect to the plurality of drive wheels,
wherein the controller is configured such that the respective orientations of the first drive wheel and the second drive wheel are different from each other when a preset time elapses from a time when the operation detector detects no manual operation.

6. The work vehicle according to any one of claims 1 to 5, further comprising:
a support mechanism supported by the vehicle body and configured to support the plurality of drive wheels to be positionally changeable with respect to the vehicle body;
a hydraulic motor configured to drive each of the plurality of drive wheels by using supply and discharge of hydraulic fluid as drive energy;
a control valve configured to change supply and discharge amounts of the hydraulic fluid with respect to the hydraulic motor; and
an inclination detection unit configured to detect an inclination state of the loading portion,
wherein the controller is configured to control an operation of the support mechanism such that the loading portion is in a horizontal posture based on the inclination state of the loading portion, and such that the drive control is stopped by closing the control valve to block the supply and discharge of the hydraulic fluid with respect to the hydraulic motor when the vehicle is stopped.

7. A work vehicle, comprising:
a vehicle body;
a plurality of drive wheels configured to cause the vehicle body to travel;
a plurality of auxiliary wheels configured to assist traveling of the vehicle body; and
a plurality of support legs connected to the vehicle body and configured to support the drive wheels and the auxiliary wheels,
wherein a large number of lugs are formed on a tread portion of the drive wheel, and
a tread portion of the auxiliary wheel is formed in a shape different from a shape of the tread portion of the drive wheel.

8. The work vehicle according to claim 7, wherein a large number of lugs is formed only on the tread portion of the drive wheel in the tread portion of the drive wheel and the tread portion of the auxiliary wheel.

9. The work vehicle according to claim 7,
wherein a large number of lugs is formed on the tread portion of the drive wheel and the tread portion of the auxiliary wheel, respectively, and
a height of the lug of the auxiliary wheel is lower than a height of the lug of the drive wheel.

10. The work vehicle according to claim 8 or 9,
wherein the plurality of drive wheels includes the drive wheels on a front side and the drive wheels on a rear side, and
a large number of lugs in the drive wheels on the front side and a large number of lugs in the drive wheels on the rear side are arranged front-rear symmetrically.

11. The work vehicle according to any one of claims 7 to 10, wherein an outer diameter of the auxiliary wheel is smaller than an outer diameter of the drive wheel.

12. The work vehicle according to any one of claims 7 to 11, further comprising:
a plurality of mudguard members configured to cover each of the plurality of drive wheels from above,
wherein the mudguard members are formed in a shape along an outer peripheral shape of the drive wheels.

13. The work vehicle according to claim 12, wherein the mudguard members is disposed above a rotation axis center of the drive wheel.

14. The work vehicle according to claim 12 or 13,
wherein the drive wheel is operatable to steer, and
the mudguard member is supported by the support leg.
